# EUROPÄISCHE PATENTSCHRIFT

(11) **EP 2 129 563 B1**
(45) Veröffentlichungstag und Bekanntmachung des Hinweises auf die Patenterteilung: **25.05.2011**
(21) Anmeldenummer: 08716657.5
(22) Anmeldetag: 20.03.2008
(51) Int. Cl.: B60T 13/68, B60T 13/26, B60T 15/04

(54) **ELEKTRISCHE FESTSTELLBREMSANLAGE FÜR EIN NUTZFAHRZEUG UND BETRIEBSVERFAHREN**
ELECTRICAL PARKING BRAKE SYSTEM FOR A UTILITY VEHICLE AND OPERATING METHOD
SYSTÈME DE FREIN DE STATIONNEMENT ÉLECTRIQUE POUR UN VÉHICULE UTILITAIRE ET PROCÉDÉ D'UTILISATION

(30) Priorität: 22.03.2007 DE 102007014427
(43) Veröffentlichungstag der Anmeldung: 09.12.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2008/002248
(87) Internationale Veröffentlichungsnummer: WO 2008/113592

(56) Entgegenhaltungen:
- EP-A- 0 145 921
- WO-A-2005/025958

## Beschreibung

Die Erfindung betrifft eine elektrische Feststellbremsanlage für ein Nutzfahrzeug und ein Verfahren zum Betreiben einer elektrischen Feststellbremsanlage.

In Nutzfahrzeugen kommen in zunehmendem Maße elektrische Feststellbremsanlagen zum Einsatz, die in das pneumatische Bremssystem des Nutzfahrzeugs zu integrieren sind. Die Besonderheit bei elektrischen Feststellbremsanlagen besteht darin, dass zur Bedienung kein Handbremsventil mehr vorgesehen ist, sondern ein elektrischer Schalter, der der elektronischen Steuereinheit der Feststellbremsanlage Signale übermittelt. Die elektronische Steuereinheit steuert dann in Abhängigkeit dieser Signale ein oder mehrere Ventile an, um auf diese Weise die Federspeicherzylinder der Feststellbremsanlage zu be- oder entlüften, das heißt die Feststellbremsanlage zu lösen oder zu spannen.

Im Hinblick auf das Belüften, also das Lösen der Feststellbremsanlage ist es wichtig, bestimmte Sicherheitskriterien einzuhalten. Insbesondere darf die Feststellbremse niemals geöffnet werden, wenn im Betriebsbremssystem noch kein ausreichender Druck für das Betätigen der Betriebsbremse vorhanden ist. Mindestens muss der so genannte Hilfsbremsdruck vorhanden sein, bei dem es sich um einen Druck unterhalb des normalen Betriebsbremsdruckes handelt, der allerdings bereits ausreichend ist, um eine Bremsung des Fahrzeugs durchzuführen.

Weitere Sicherheitsbestimmungen gelten insbesondere in einigen Ländern Nordeuropas. Diese fordern die so genannte "Northland Park Brake Function". Diese stellt sicher, dass die Feststellbremse nur dann gelöst werden kann, wenn sich der Fahrer im Führerhaus befindet. Normalerweise, das heißt bei ausreichendem Druck in der Bremsanlage, ist dies selbstverständlich, denn das Betätigungselement zum Lösen der Feststellbremse befindet sich im Führerhaus, so dass der Fahrer gezwungenermaßen im Führerhaus anwesend sein muss, wodurch er auch in der Lage ist, das Fahrzeug bei gelöster Feststellbremse jederzeit durch Betätigen der Betriebsbremse zum Stehen zu bringen. Allerdings kann eine gefährliche Situation dann auftreten, wenn der Fahrer den Fahrzeugmotor bei druckloser Bremsanlage startet und damit den Druckaufbau durch den Betrieb des Kompressors erst in Gang setzt. Gibt der Fahrer zu diesem Zeitpunkt den Druckluftpfad zu den Federspeicherzylindern frei, so führt dies Aufgrund eines nicht ausreichenden Druckes noch nicht zum Lösen der Feststellbremse. Das Fahrzeug steht also still, und der Fahrer könnte von der irrigen Annahme ausgehen, dass insgesamt eine sichere Situation vorliegt. Verlässt der Fahrer nun das Führerhaus, um beispielsweise eine vereiste Windschutzscheibe vom Eis zu befreien, so kann dies dazu führen, dass der Druck zum Lösen der Feststellbremse gerade dann ausreicht, wenn der Fahrer sich nicht im Führerhaus befindet. Dies hat zur Folge, dass das Fahrzeug wegrollt und eventuell sogar den mit dem Reinigen der Scheiben befassten Fahrer überrollt.

Dokument EP-A-0 145 921 offenbart die overvegriffe der Ansprüchen 1 und 16.

In der DE 103 41 723 B4 wird bereits ein Konzept vorgeschlagen, wie dies vermieden werden kann. Dieses Konzept beruht darauf, dass die Steuereinheit einer Luftaufbereitungsanlage Signale überwacht, die für die Anwesenheit des Fahrers im Führerhaus kennzeichnend sind. Werden diese Signale nicht empfangen, so wird die Druckluftversorgung des Handbremsventils und somit auch der Federspeicherzylinder gesperrt. Erst wenn der Fahrer anwesend ist und ein ausreichender Druck für die Hilfsbremswirkung zur Verfügung steht, wird die Druckluftversorgung der Feststellbremse durch die Luftaufbereitungsanlage freigegeben. Das Sperren beziehungsweise Freigeben der Versorgung der Luftaufbereitungsanlage erfolgt dabei so, dass die Funktion eines der Feststellbremsanlage zugeordneten Überströmventils durch Belüften beziehungsweise Entlüften eines Steuereingangs des Überströmventils beeinflusst wird.

Der Erfindung liegt die Aufgabe zugrunde, die oben beschriebene "Northland Park Brake Function" in vereinfachter Weise zu realisieren.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung betrifft eine elektrische Feststellbremsanlage für ein Nutzfahrzeug, mit einer Ventileinrichtung, welche einen Druckluftvorrat mit einem Federspeicherzylinder ohne Zwischenschaltung eines Handbremsventils verbindet, wobei die elektrisch ansteuerbare Ventileinrichtung in einem ersten Schaltzustand den Federspeicherzylinder belüftet und in einem zweiten Schaltzustand den Federspeicher entlüftet, einem Drucksensor, mit dem ein druckluftvorratsseitiger Druck messbar ist, und einer elektronischen Steuereinheit zum unmittelbaren oder mittelbaren Ansteuern der Ventileinrichtung, zum Erfassen eines von dem Drucksensor gelieferten Signals und zum Erfassen eines Indikatorsignals für die Anwesenheit einer Person in einem Führerhaus des Nutzfahrzeugs, wobei die Ventileinrichtung nur dann durch die Steuereinheit in ihren ersten Schaltzustand überführbar ist, wenn der druckluftvorratsseitige Druck einen Druckschwellenwert überschreitet und der Indikator für die Anwesenheit einer Person in einem Führerhaus des Nutzfahrzeugs vorliegt. Auf diese Weise wird eine versorgungsseitige Sperrung für das Lösen der Feststellbremse entbehrlich, so dass insbesondere kein Magnetventil vorgesehen werden muss, welches in der Lage ist, ein die Feststellbremsanlage versorgendes Überströmventil bei Bedarf zu sperren. Vielmehr nimmt das Steuergerät der elektrischen Feststellbremse auch im Hinblick auf die Sperrung der Belüftung der Feststellbremszylinder direkten Einfluss auf die Ventileinrichtung, welche allgemein zur pneumatischen Betätigung der Feststellbremsanlage verwendet wird. Die elektronische Steuereinheit der Feststellbremsanlage kann dabei eine große Anzahl an Aufgaben übernehmen, die mit der erwünschten Sicherheitsfunktion im Zusammenhang stehen, nämlich das Erfassen der Indikatorsignale für die Anwesenheit, das Erfassen eines Druckes zur Sicherstellung der Hilfsbremswirkung, die logische Verknüpfung dieser Bedingungen für das Belüften der Feststellbremse sowie das Ansteuern der Ventileinrichtung für die elektrische Feststellbremsanlage.

Es ist bevorzugt, dass die elektronische Steuereinheit mit einem im Führerhaus des Nutzfahrzeugs angeordneten Betätigungselement in Verbindung steht. Diese Verbindung des auch als Handsteuereinheit zu bezeichnenden Betätigungselementes mit der Steuereinheit kann durch eine direkte elektrische Verbindung oder über einen Signalbus realisiert sein. Die Handsteuereinheit beeinflusst in Anhängigkeit des Fahrerwunsches die Betriebsabläufe der elektrischen Feststellbremse, jedoch unter maßgeblicher Berücksichtigung der in Rede stehenden Sicherheitsfunktionen. Nützlicherweise ist vorgesehen, dass die Ventileinrichtung ein 3/2-Wege-Ventil ist. Ein solches 3/2-Wege-Ventil stellt die erforderliche Funktionalität zur Verfügung.

Alternativ kann vorgesehen sein, dass anstelle eines 3/2-Wege-Ventils zwei parallel angeordnete 2/2-Wegeventile vorgesehen sind. Eines dieser zwei 2/2-Wegeventile stellt im bestromten Zustand eine Verbindung zu einem Vorrat zur Verfügung, während das andere 2/2-Wegeventile im bestromten Zustand eine Entlüftungsfunktion zur Verfügung stellt. Im stromlosen Zustand sind beide 2/2-Wegeventile durch eine Feder in Sperrposition geschaltet.

Nützlicherweise kann vorgesehen sein, dass das 3/2-Wegeventil ein elektrisch ansteuerbares Magnetventil ist. Insbesondere kann das elektrisch ansteuerbare Magnetventil ein direkt gesteuertes 3/2-Wege-Magnetventil sein, das in dem Versorgungspfad und dem Entlüftungspfad der Federspeicherzylinder angeordnet ist. Wird in diesem Fall das 3/2-Wege-Ventil durch zwei 2/2-Wege-Ventile ersetzt, so ist eines dieser 2/2-Wege-Ventile für die Belüftung des Federspeicherzylinders und das andere 2/2-Wege-Ventil für Entlüftung des Federspeicherzylinders zuständig.

Weiterhin ist auch möglich, dass das 3/2-Wegeventil ein elektrisch betätigtes, vorgesteuertes Ventil ist. Grundsätzlich können auch bei einer solchen Vorsteuerung verschiedene Wege beschritten werden, um die prinzipielle Funktionalität eines elektrisch betätigten vorgesteuerten 3/2-Wegeventils zur Verfügung zu stellen. Beispielsweise kann das Vorsteuermagnetventil als 3/2-Wege-Ventil oder in der Form von zwei 2/2-Wege-Ventilen ausgelegt sein, während das im Belüftungspfad und im Entlüftungspfad der Federspeicherzylinder angeordnete Ventil nach wie vor als 3/2-Wegeventil ausgebildet ist. In diesem Fall dient eines der 2/2-Wege-Ventile der Belüftung einer Steuerkammer des 3/2-Wege-Ventils, während das andere 2/2-Wege-Magnetventil die Steuerkammer des 3/2-Wege-Venitls entlüftet. Von besonderem Vorteil ist, wenn das im Entlüftungspfad und Belüftungspfad des Federspeicherzylinders angeordnete Ventil neben der Entlüftungs- und Belüftungsfunktion auch eine Druckhaltefunktion realisieren kann. Dies kann beispielsweise durch ein Schieberventil umgesetzt werden, das eine Zwischenschaltstellung zwischen der entlüftenden und der belüftenden Schaltstellung aufweist, also als 3/3-Wege-Ventil ausgelegt ist. Die Druckhaltefunktion kann auch auf der Grundlage eines 3/2-Wege-Relaisventils realisiert werden, beispielsweise durch eine pulsweitenmodulierte Ansteuerung.

Es kann vorgesehen sein, dass das 3/2-Wege-Magnetventil bistabil ist. Auf diese Weise kommt es nur zu einem Übergang zwischen den beiden Schaltzuständen der Ventileinrichtung, wenn entsprechende Steuersignale ausgegeben werden. Ein unbeabsichtigtes Lösen beziehungsweise Spannen der Feststellbremsanlage wird somit vermieden.

Gemäß einer Variante der Erfindung ist vorgesehen, dass dem 3/2-Wegeventil ein 2/2-Wegeventil nachgeschaltet ist. Hierdurch wird die Stufbarkeit der Feststellbremsanlage verbessert, insbesondere wenn ein 2/2-Wege-Magnetventil zwischen einem 3/2-Wege-Magnetventil und der Ventilvorsteuerkammer eines vorgesteuerten Ventils angeordnet ist.

Es kann vorgesehen sein, dass von dem Drucksensor der Druck der der Ventileinrichtung zugeführten Druckluft messbar ist. Anhand dieses Druckes kann ermittelt werden, ob die erforderliche Hilfsbremswirkung zur Verfügung steht.

Ebenfalls kann vorgesehen sein, dass von dem Drucksensor der Druck in einem der Betriebsbremskreise des Nutzfahrzeugs messbar ist. Dies ist insbesondere im Falle einer seriellen Versorgung der Feststellbremsanlage aus den Betriebsbremskreisen nützlich. In diesem Fall ist vorzugsweise vorgesehen dass der Druckschwellenwert der Schließdruck eines den Betriebsbremskreis versorgenden Überströmventils ist.

Bei einer weiteren Ausführungsform der vorliegenden Erfindung ist vorgesehen, dass von dem Drucksensor der Druck in einer Versorgungsleitung messbar ist, die sowohl die Betriebsbremskreise als auch die Ventileinrichtung mit Druckluft beliefert. Auch anhand einer Druckmessung an einer solchen zentralen Versorgungsleitung kann beurteilt werden, ob die Hilfsbremswirkung bereits erzielbar ist.

Es kann vorgesehen sein, dass das Indikatorsignal für die Anwesenheit einer Person in einem Führerhaus des Nutzfahrzeugs bei belegtem Fahrersitz an die elektronische Steuereinheit übermittelbar ist.

Gemäß einer weiteren Ausführungsform kann vorgesehen sein, dass das Indikatorsignal für die Anwesenheit einer Person in einem Führerhaus des Nutzfahrzeugs bei angelegtem Sicherheitsgurt an die elektronische Steuereinheit übermittelbar ist.

Die Erfindung ist weiterhin in nützlicher Weise so ausgebildet, dass das Indikatorsignal für die Anwesenheit einer Person in einem Führerhaus des Nutzfahrzeugs bei betätigtem Brems- und/oder Gaspedal an die elektronische Steuereinheit übermittelbar ist.

Weiterhin kann vorgesehen sein, dass die Ventileinrichtung und/oder die elektronische Steuereinheit und/oder der Drucksensor in eine Luftaufbereitungsanlage integriert sind. Auch wenn die "Northland Park Brake Function" nunmehr nicht mehr durch die Luftaufbereitungsanlage, sondern durch die elektrische Feststellbremsanlage wahrgenommen wird, kann es gleichwohl nützlich sein, Komponenten der Feststellbremsanlage in die elektronischen Luftaufbereitungsanlage zu integrieren, wobei dies insbesondere eine mögliche Vollintegration, das heißt sowohl der Ventileinrichtung, der elektronischen Steuereinheit als auch der erforderlichen Drucksensoren umfasst.

Die Erfindung betrifft weiterhin ein Verfahren zum Betreiben einer elektrischen Feststellbremsanlage für ein Nutzfahrzeug, bei dem eine elektrisch ansteuerbaren Ventileinrichtung einen Druckluftvorrat mit einem Federspeicherzylinder ohne Zwischenschaltung eines Handbremsventils verbindet, wobei die elektrisch ansteuerbare Ventileinrichtung in einem ersten Schaltzustand den Federspeicherzylinder belüftet und in einem zweiten Schaltzustand den Federspeicher entlüftet, ein druckluftvorratsseitiger Druck von einem Drucksensor gemessen wird, eine elektronischen Steuereinheit die Ventileinrichtung ansteuert und ein von dem Drucksensor geliefertes Signal sowie einen Indikator für die Anwesenheit einer Person in einem Führerhaus des Nutzfahrzeugs erfasst, wobei die Ventileinrichtung nur dann durch die Steuereinheit in ihren ersten Schaltzustand überführt wird, wenn der druckluftvorratsseitige Druck einen Schwellenwert überschreitet und der Indikator für die Anwesenheit einer Person in einem Führerhaus des Nutzfahrzeugs vorliegt. Auf diese Weise werden die Vorteile und Besonderheiten der erfindungsgemäßen elektrischen Feststellbremsanlage auch im Rahmen eines Verfahrens umgesetzt. Dies gilt auch im Zusammenhang mit den nachfolgend angegebenen besonders bevorzugten Ausführungsformen des erfindungsgemäßen Verfahrens.

Dieses ist nützlicherweise so ausgebildet, dass die elektronische Steuereinheit Signale von einem im Führerhaus des Nutzfahrzeugs angeordneten Betätigungselement erfasst.

Es ist bevorzugt, dass von dem Drucksensor der Druck der der Ventileinrichtung zugeführten Druckluft gemessen wird.

Weiterhin kann vorgesehen sein, dass von dem Drucksensor der Druck in einem der Betriebsbremskreise des Nutzfahrzeugs gemessen wird.

Das Verfahren kann weiterhin so ausgestaltet sein, dass als Druckschwellenwert der Schließdruck eines den Betriebsbremskreis versorgenden Überströmventils verwendet wird.

Weiterhin kann vorgesehen sein, dass von dem Drucksensor der Druck in einer Versorgungsleitung gemessen wird, die sowohl die Betriebsbremskreise als auch die Ventileinrichtung mit Druckluft beliefert.

Die Erfindung ist in besonders vorteilhafter Weise durch ein solches Verfahren weitergebildet, dass das Indikatorsignal für die Anwesenheit einer Person in einem Führerhaus des Nutzfahrzeugs bei belegtem Fahrersitz an die elektronische Steuereinheit übermittelt wird.

Ebenfalls ist möglich, dass das Indikatorsignal für die Anwesenheit einer Person in einem Führerhaus des Nutzfahrzeugs bei angelegtem Sicherheitsgurt an die elektronische Steuereinheit übermittelt wird.

Gemäß einer weiteren Ausführungsform des erfindungsgemäßen Verfahrens ist vorgesehen, dass das Indikatorsignal für die Anwesenheit einer Person in einem Führerhaus des Nutzfahrzeugs bei betätigtem Brems- und/oder Gaspedal an die elektronische Steuereinheit übermittelbar ist.

Die Erfindung wird nun mit Bezug auf die begleitende Zeichnung anhand einer besonders bevorzugten Ausführungsform beispielhaft erläutert.

Es zeigen:
- Figur 1: eine schematische Darstellung von Komponenten einer ersten Ausfüh- rungsform einer erfindungsgemäßen elektrischen Feststellbremsanlage und
- Figur 2: eine schematische Darstellung von Komponenten einer zweiten Aus- führungsform einer erfindungsgemäßen elektrischen Feststellbremsan- lage.

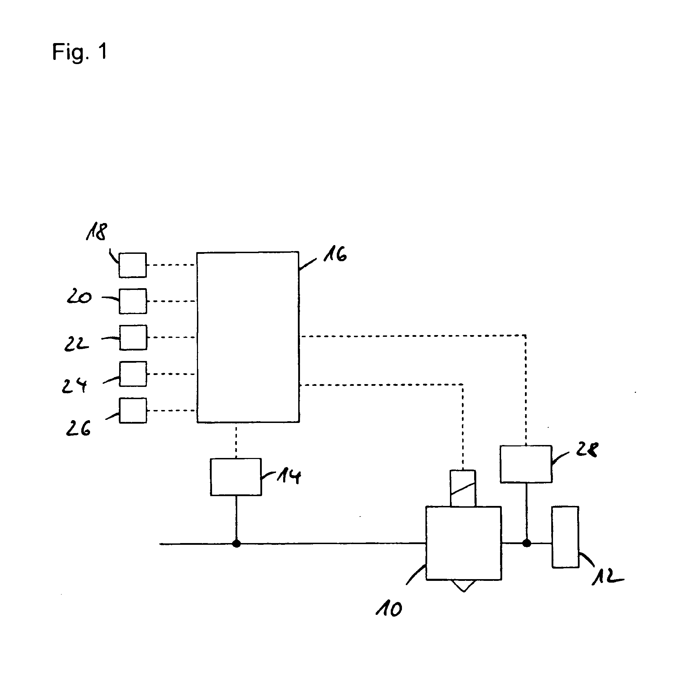

Figur 1 zeigt eine schematische Darstellung von Komponenten einer ersten Ausführungsform einer erfindungsgemäßen elektrischen Feststellbremsanlage. In Figur 1 stellen durchgezogenen Linien pneumatische Leitungen dar, während unterbrochen gezeichnete Linien elektrische Leitungen symbolisieren. Es ist eine Ventileinrichtung 10 vorgesehen, über die ein Federspeicherzylinder 12 mit Druckluft beaufschlagt werden kann. Der Federspeicherzylinder 12 steht stellvertretend für mehrere Federspeicherzylinder, die durch die Ventileinrichtung 10 angesteuert werden können. Der von der Ventileinrichtung 10 durchgesteuerte Druck wird von einem Drucksensor 28 erfasst. Ein dem Druck entsprechendes Signal wird von dem Drucksensor 28 an eine elektronische Steuereinheit 16 ausgegeben, wodurch der Druck im Federspeicherzylinder 12 bei der Steuerung der Feststellbremsanlage und insbesondere bei der elektrischen Ansteuerung der Ventileinrichtung 10 berücksichtigt werden kann.

Neben dem belüftenden Schaltzustand der Ventileinrichtung 10 kann diese den Federspeicherzylinder 12 entlüften. Es ist ein weiterer Drucksensor 14 vorgesehen, der auf der Druckluftversorgungsseite der Ventileinrichtung 10 einen Druck erfasst und an die elektronische Steuereinheit 16 ein entsprechendes Signal übermittelt.

Dieser Druck kann, wie dargestellt, unmittelbar vor der Ventileinrichtung 10 gemessen werden oder aber auch in den Betriebsbremskreisen oder in einer Hauptversorgungsleitung. Er muss lediglich dafür kennzeichnend sein, ob die Hilfsbremswirkung für die Betriebsanlage bereits sichergestellt ist. Die elektronische Steuereinheit 16 steht mit weiteren Komponenten in Verbindung, nämlich insbesondere einem elektrischen Betätigungselement 18 für die elektrische Feststellbremsanlage, das in Form eines Schalters oder dergleichen im Führerhaus des Fahrzeugs angeordnet ist.

Weiterhin kann die elektronische Steuereinheit 10 mit einer oder mehreren der folgenden weiteren Komponenten in Verbindung stehen, nämlich einem Sitzbelegungssensor 20, einem Bremspedalsensor 22, einem Gaspedalsensor 24 oder einem Sicherheitsgurtsensor 26. Diese Sensoren können zuverlässige Informationen darüber liefern, ob der Fahrer im Führerhaus anwesend ist, so dass in Abhängigkeit davon und bei einem ausreichenden von dem Drucksensor 14 gemessenen Druck innerhalb der Steuereinheit 16 eine Freigabe erfolgt, um auf dieser Grundlage die Ventileinrichtung 10 in einen den Federspeicherzylinder 12 belüftenden Zustand zu überführen.

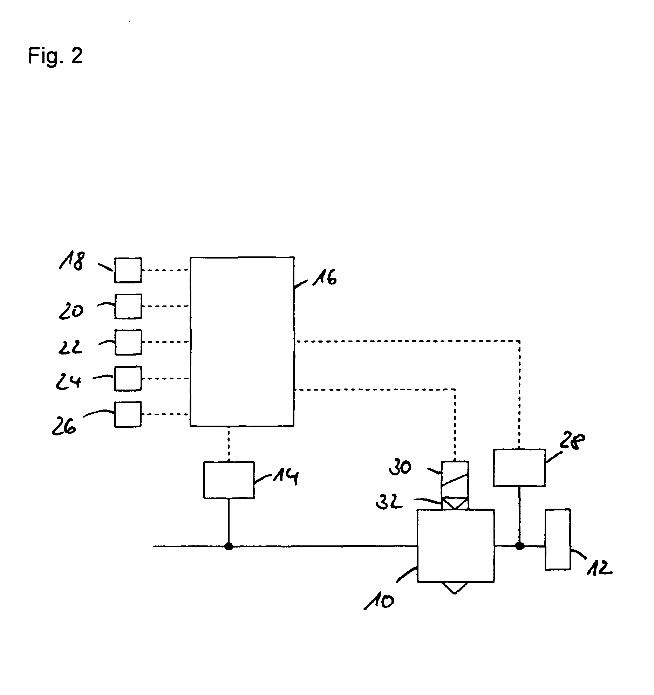

Figur 2 zeigt eine schematische Darstellung von Komponenten einer zweiten Ausführungsform einer erfindungsgemäßen elektrischen Feststellbremsanlage. Die Feststellbremsanlage gemäß Figur 2 entspricht in weiten Teilen derjenigen gemäß Figur 1. Im Unterschied zu Figur 1 ist die Ventileinrichtung 10 als vorgesteuertes Ventil ausgelegt, wobei das Vorsteuermagnetventil 30 und der Vorsteuerkolben 32 durch ihre jeweiligen Schaltsymbole dargestellt sind. Hierdurch können in einfacher Weise größere Strömungsquerschnitte im Ventilbereich zur Verfügung gestellt werden. Die Vorsteuerung kann durch ein 3/2-Wege-Magnetventil oder beispielsweise auch durch zwei parallel geschaltete 2/2-Wege-Magnetventile erfolgen. Im letzteren Fall verbindet eines der Magnetventile in seinem bestromten Zustand den Vorrat mit einer Vorsteuerkammer, während das andere Magnetventil die Vorsteuerkammer in bestromten Zustand entlüftet. Im stromlosen Zustand sind beide 2/2-Wege-Magnetventile durch eine Feder in Sperrposition geschaltet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Ventileinrichtung
- 12: Federspeicherzylinder
- 14: Drucksensor
- 16: elektronische Steuereinheit
- 18: Betätigungselement
- 20: Sitzbelegungssensor
- 22: Bremspedalsensor
- 24: Gaspedalsensor
- 26: Sicherheitsgurtsensor
- 28: Drucksensor
- 30: Vorsteuermagnetventil
- 32: Vorsteuerkolben

## Patentansprüche

1. Elektrische Feststellbremsanlage für ein Nutzfahrzeug, mit
- einer Ventileinrichtung (10), welche einen Druckluftvorrat mit einem Federspeicherzylinder (12) ohne Zwischenschaltung eines Handbremsventils verbindet, wobei die Ventileinrichtung (10) in einem ersten Schaltzustand den Federspeicherzylinder (12) belüftet und in einem zweiten Schaltzustand den Federspeicher entlüftet,
- einem Drucksensor (14), mit dem ein druckluftvorratsseitiger Druck messbar ist, und
- einer elektronischen Steuereinheit (16) zum unmittelbaren oder mittelbaren Ansteuern der Ventileinrichtung (10) und zum Erfassen eines von dem Drucksensor (14) gelieferten Signals
**dadurch gekennzeichnet, dass** die electronische steureinheit (16) zum Erfassen eines Indikatorsignals für die Anwesenheit einer Person in einem Führerhaus des Nutzfahrzeugs ausgelge ist,
- wobei die Ventileinrichtung (10) nur dann durch die Steuereinheit (16) in ihren ersten Schaltzustand überführbar ist, wenn der druckluftvorratsseitige Druck einen Druckschwellenwert überschreitet und ein Indikator signal für die Anwesenheit einer Person in dem Führerhaus des Nutzfahrzeugs vorliegt.

2. Elektrische Feststellbremsanlage nach Anspruch 1, **dadurch gekennzeichnet, dass** die elektronische Steuereinheit (16) mit einem im Führerhaus des Nutzfahrzeugs angeordneten Betätigungselement (18) in Verbindung steht.

3. Elektrische Feststellbremsanlage nach Anspruch 1 oder 2, **dadurch gekennzeichnet, dass** die Ventileinrichtung (10) ein 3/2-Wegeventil ist.

4. Elektrische Feststellbremsanlage nach Anspruch 3, **dadurch gekennzeichnet, dass** das 3/2-Wegeventil (10) ein elektrisch ansteuerbares Magnetventil ist.

5. Elektrische Feststellbremsanlage nach Anspruch 3, **dadurch gekennzeichnet, dass** das 3/2-Wegeventil (10) ein elektrisch betätigtes, vorgesteuertes Ventil ist.

6. Elektrische Feststellbremsanlage nach einem der Ansprüche 3 bis 5, **dadurch gekennzeichnet, dass** das 3/2-Wegeventil (10) bistabil ist.

7. Elektrische Feststellbremsanlage nach einem der Ansprüche 3 bis 6, **dadurch gekennzeichnet, dass** dem 3/2-Wegeventil (10) ein 2/2-Wegeventil nachgeschaltet ist.

8. Elektrische Feststellbremsanlage nach einem der vorhergehenden Ansprüche, **dadurch gekennzeichnet, dass** von dem Drucksensor (14) der Druck der der Ventileinrichtung (10) zugeführten Druckluft messbar ist.

9. Elektrische Feststellbremsanlage nach einem der Ansprüche 1 bis 7, **dadurch gekennzeichnet, dass** von dem Drucksensor (14) der Druck in einem der Betriebsbremskreise des Nutzfahrzeugs messbar ist.

10. Elektrische Feststellbremsanlage nach Anspruch 9, **dadurch gekennzeichnet, dass** der Druckschwellenwert der Schließdruck eines den Betriebsbremskreis versorgenden Überströmventils ist.

11. Elektrische Feststellbremsanlage nach einem der Ansprüche 1 bis 7, **dadurch gekennzeichnet, dass** von dem Drucksensor (14) der Druck in einer Versorgungsleitung messbar ist, die sowohl die Betriebsbremskreise als auch die Ventileinrichtung (10) mit Druckluft beliefert.

12. Elektrische Feststellbremsanlage nach einem der vorhergehenden Ansprüche, **dadurch gekennzeichnet, dass** das Indikatorsignal für die Anwesenheit einer Person in einem Führerhaus des Nutzfahrzeugs bei belegtem Fahrersitz an die elektronische Steuereinheit (16) übermittelbar ist.

13. Elektrische Feststellbremsanlage nach einem der vorhergehenden Ansprüche, **dadurch gekennzeichnet, dass** das Indikatorsignal für die Anwesenheit einer Person in einem Führerhaus des Nutzfahrzeugs bei angelegtem Sicherheitsgurt an die elektronische Steuereinheit (16) übermittelbar ist.

14. Elektrische Feststellbremsanlage nach einem der vorhergehenden Ansprüche, **dadurch gekennzeichnet, dass** das Indikatorsignal für die Anwesenheit einer Person in einem Führerhaus des Nutzfahrzeugs bei betätigtem Brems- und/oder Gaspedal an die elektronische Steuereinheit (16) übermittelbar ist.

15. Elektrische Feststellbremsanlage nach einem der vorhergehenden Ansprüche, **dadurch gekennzeichnet, dass** die Ventileinrichtung (10) und/oder die elektronische Steuereinheit (16) und/oder der Drucksensor (14) in eine Luftaufbereitungsanlage integriert sind.

16. Verfahren zum Betreiben einer elektrische Feststellbremsanlage für ein Nutzfahrzeug, bei dem
- eine elektrisch ansteuerbaren Ventileinrichtung (10) einen Druckluftvorrat mit einem Federspeicherzylinder (12) ohne Zwischenschaltung eines Handbremsventils verbindet, wobei die elektrisch ansteuerbare Ventileinrichtung (10) in einem ersten Schaltzustand den Federspeicherzylinder (12) belüftet und in einem zweiten Schaltzustand den Federspeicher (12) entlüftet,
**dadurch gekennzeichnet, dass**
- ein druckluftvorratsseitiger Druck von einem Drucksensor (14) gemessen wird,
- eine elektronischen Steuereinheit (16) die Ventileinrichtung (10) ansteuert und ein von dem Drucksensor (14) geliefertes Signal sowie einen Indikator für die Anwesenheit einer Person in einem Führerhaus des Nutzfahrzeugs erfasst,
- wobei die Ventileinrichtung (10) nur dann durch die Steuereinheit (16) in ihren ersten Schaltzustand überführt wird, wenn der druckluftvorratsseitige Druck einen Schwellenwert überschreitet und der Indikator für die Anwesenheit einer Person in einem Führerhaus des Nutzfahrzeugs vorliegt.

17. Verfahren nach Anspruch 16, **dadurch gekennzeichnet, dass** die elektronische Steuereinheit (16) Signale von einem im Führerhaus des Nutzfahrzeugs angeordneten Betätigungselement (18) erfasst.

18. Verfahren nach Anspruch 16 oder 17, **dadurch gekennzeichnet, dass** von dem Drucksensor (14) der Druck der der Ventileinrichtung (10) zugeführten Druckluft gemessen wird.

19. Verfahren nach Anspruch 16 oder 17, **dadurch gekennzeichnet, dass** von dem Drucksensor (14) der Druck in einem der Betriebsbremskreise des Nutzfahrzeugs gemessen wird.

20. Verfahren nach Anspruch 19, **dadurch gekennzeichnet,dass** als Druckschwellenwert der Schließdruck eines den Betriebsbremskreis versorgenden Überströmventils verwendet wird.

21. Verfahren nach Anspruch 16 oder 17, **dadurch gekennzeichnet, dass** von dem Drucksensor (14) der Druck in einer Versorgungsleitung gemessen wird, die sowohl die Betriebsbremskreise als auch die Ventileinrichtung (10) mit Druckluft beliefert.

22. Verfahren nach einem der Ansprüche 16 bis 21, **dadurch gekennzeichnet, dass** das Indikatorsignal für die Anwesenheit einer Person in einem Führerhaus des Nutzfahrzeugs bei belegtem Fahrersitz an die elektronische Steuereinheit (16) übermittelt wird.

23. Verfahren nach einem der Ansprüche 16 bis 22, **dadurch gekennzeichnet, dass** das Indikatorsignal für die Anwesenheit einer Person in einem Führerhaus des Nutzfahrzeugs bei angelegtem Sicherheitsgurt an die elektronische Steuereinheit (16) übermittelt wird.

24. Verfahren nach einem der Ansprüche 16 bis 23, **dadurch gekennzeichnet, dass** das Indikatorsignal für die Anwesenheit einer Person in einem Führerhaus des Nutzfahrzeugs bei betätigtem Brems- und/oder Gaspedal an die elektronische Steuereinheit (16) übermittelt wird.

## Claims

1. Electric parking brake system for a commercial vehicle, comprising
- a valve device (10) which connects a compressed-air supply to a spring brake cylinder (12) without the interposition of a handbrake valve, wherein the valve device (10) in a first switching state vents the spring brake cylinder (12) and in a second switching state vents the accumulator,
- a pressure sensor (14) with which a compressed air supply-side pressure can be measured, and
- an electronic control unit (16) for directly or indirectly actuating the valve device (10) and for registering a signal supplied by the pressure sensor (14),
- **characterised in that** the electronic control unit (16) is configured for registering an indicator signal for the presence of a person in a driver's cab of the commercial vehicle,
- and **in that** the valve device (10) can be transferred into its first switching state by the control unit (16) only when the compressed air supply-side pressure exceeds a pressure threshold value and an indicator signal of the presence of a person in a driver's cab of the commercial vehicle is present.

2. Electric parking brake according to claim 1, **characterised in that** the electronic control unit (16) is connected to an actuation element (18) which is located in the driver's cab of the commercial vehicle.

3. Electric parking brake according to claim 1 or 2, **characterised in that** the valve device (10) is a 3/2-way valve.

4. Electric parking brake according to claim 3, **characterised in that** the 3/2-way valve (10) is an electrically selectable solenoid valve.

5. Electric parking brake according to claim 3, **characterised in that** the 3/2-way valve (10) is an electrically operated pilot-controlled valve.

6. Electric parking brake according to any of claims 3 to 5, **characterised in that** the 3/2-way valve (10) is bistable.

7. Electric parking brake according to any of claims 3 to 6, **characterised in that** a 2/2-way valve is provided downstream of the 3/2-way valve (10).

8. Electric parking brake according to any of the preceding claims, **characterised in that** the pressure sensor (14) can be used to measure the pressure of the compressed air which is fed to the valve device (10).

9. Electric parking brake according to any of claims 1 to 7, **characterised in that** the pressure sensor (14) can be used to measure the pressure in one of the service brake circuits of the commercial vehicle.

10. Electric parking brake according to claim 9, **characterised in that** the pressure threshold value is the closing pressure of an overflow valve which supplies the service brake circuit.

11. Electric parking brake according to any of claims 1 to 7, **characterised in that** the pressure sensor (14) can be used to measure the pressure in a supply line which supplies both the service brake circuits and the valve device (10) with compressed air.

12. Electric parking brake according to any of the preceding claims, **characterised in that** the indicator signal for the presence of a person in a driver's cab of the commercial vehicle can be transmitted to the electronic control unit (16) when the driver's seat is occupied.

13. Electric parking brake according to any of the preceding claims, **characterised in that** the indicator signal for the presence of a person in a driver's cab of the commercial vehicle can be transmitted to the electronic control unit (16) when the seat belt is put on.

14. Electric parking brake according to any of the preceding claims, **characterised in that** the indicator signal for the presence of a person in a driver's
cab of the commercial vehicle can be transmitted to the electronic control unit (16) when the brake pedal and/or accelerator pedal are/is operated.

15. Electric parking brake according to any of the preceding claims, **characterised in that** the valve device (10) and/or the electronic control unit (16) and/or the pressure sensor (14) is/are integrated into an air-treatment system.

16. Method for operating an electric parking brake system for a commercial vehicle, wherein
- an electrically selectable valve device (10) connects a compressed-air supply to a spring brake cylinder (12) without the interposition of a handbrake valve, wherein the electrically selectable valve device (10) in a first switching state vents the spring brake cylinder (12) and in a second switching state vents the accumulator,
- **characterised in that** a compressed air supply-side pressure is measured by a pressure sensor (14),
- **in that** an electronic control unit (16) selects the valve device (10) and registers a signal which is supplied by the pressure sensor (14) and an indicator of the presence of a person in a driver's cab of the commercial vehicle,
- wherein the valve device (10) can be transferred into its first switching state by the control unit (16) only when the compressed air supply-side pressure exceeds a pressure threshold value and the indicator for the presence of a person in a driver's cab of the commercial vehicle is present.

17. Method according to claim 16, **characterised in that** the electronic control unit (16) registers signals from an actuation element (18) which is located in the driver's cab of the commercial vehicle.

18. Method according to claim 16 or 17, **characterised in that** the pressure sensor (14) measures the pressure of the compressed air which is fed to the valve device (10).

19. Method according to claim 16 or 17, **characterised in that** the pressure sensor (14) measures the pressure in one of the service brake circuits of the commercial vehicle.

20. Method according to claim 19, **characterised in that** closing pressure of an overflow valve which supplies the service brake circuit is used as the pressure threshold value.

21. Method according to claim 16 or 17, **characterised in that** the pressure sensor (14) measures the pressure in a supply line which supplies both the service brake circuits and the valve device (10) with compressed air.

22. Method according to any of claims 16 to 21, **characterised in that** the indicator signal for the presence of a person in a driver's cab of the commercial vehicle is transmitted to the electronic control unit (16) when the driver's seat is occupied.

23. Method according to any of claims 16 to 22, **characterised in that** the indicator signal for the presence of a person in a driver's cab of the commercial vehicle is transmitted to the electronic control unit (16) when the seat belt is put on.

24. Method according to any of claims 16 to 23, **characterised in that** the indicator signal for the presence of a person in a driver's cab of the commercial vehicle is transmitted to the electronic control unit (16) when the brake pedal and/or accelerator pedal are/is operated.

## Revendications

1. Système électrique de frein de stationnement pour un véhicule utilitaire, comprenant
- un dispositif (10) de vanne, qui met une réserve d'air comprimé en communication avec un cylindre (12) à ressort accumulateur sans interposition d'une vanne de frein à main, le dispositif (10) de vanne alimentant en air le cylindre (12) à ressort accumulateur dans un premier état de commutation et le purgeant dans un deuxième état de commutation,
- un capteur (14) de pression, par lequel une pression du côté du réservoir d'air comprimé peut être mesurée, et
- une unité (16) électronique de commande pour commander directement ou indirectement le dispositif (10) de vanne et pour détecter un signal fourni par le capteur (14) de pression,
**caractérisé en ce que** l'unité (16) électronique de commande est conçue pour la détection d'un signal indicateur de la présence d'une personne dans une cabine de pilotage du véhicule automobile,
- dans lequel le dispositif (10) de vanne ne peut être mis dans son premier état de commutation par le dispositif (16) de commande que si la pression du côté du réservoir d'air comprimé dépasse une valeur de seuil de pression et que si un signal indicateur de la présence d'une personne dans la cabine de pilotage du véhicule automobile est présent.

2. Système électrique de frein de stationnement suivant la revendication 1, **caractérisé en ce que** l'unité (16) électronique de commande est en communication avec un élément (18) d'actionnement disposé dans la cabine de pilotage du véhicule utilitaire.

3. Système électrique de frein de stationnement suivant la revendication 1 ou 2, **caractérisé en ce que** le dispositif (10) de vanne est une vanne à 3/2 voies.

4. Système électrique de frein de stationnement suivant la revendication 3, **caractérisé en ce que** la vanne (10) à 3/2 voies est une électrovanne pouvant être commandée par voie électrique.

5. Système électrique de frein de stationnement suivant la revendication 3, **caractérisé en ce que** la vanne (10) à 3/2 voies est une vanne pilotée et actionnée électriquement.

6. Système électrique de frein de stationnement suivant l'une des revendications 3 à 5, **caractérisé en ce que** la vanne (10) à 3/2 voies est bistable.

7. Système électrique de frein de stationnement suivant l'une des revendications 3 à 6, **caractérisé en ce qu'**une vanne à 2/2 voies est montée en aval de la vanne (10) à 3/2 voies.

8. Système électrique de frein de stationnement suivant l'une des revendications précédentes, **caractérisé en ce que** la pression de l'air comprimé envoyé au dispositif (10) de vanne peut être mesurée par le capteur (14) de pression.

9. Système électrique de frein de stationnement suivant l'une des revendications 1 à 7, **caractérisé en ce que** la pression dans un circuit de frein de service du véhicule utilitaire peut être mesurée par le capteur (14) de pression.

10. Système électrique de frein de stationnement suivant la revendication 9, **caractérisé en ce que** la valeur du seuil de pression est la pression de fermeture d'une soupape de décharge alimentant le circuit de frein de service.

11. Système électrique de frein de stationnement suivant l'une des revendications 1 à 7, **caractérisé en ce que** la pression dans une ligne d'alimentation, qui alimente à la fois le circuit de frein de service et le dispositif (10) de vanne en air comprimé, peut être mesurée par le capteur (14) de pression.

12. Système électrique de frein de stationnement suivant l'une des revendications précédentes, **caractérisé en ce que** le signal indicateur de la présence d'une personne dans une cabine de pilotage du véhicule utilitaire peut être transmis à l'unité (16) électronique de commande lorsque le siège du conducteur est occupé.

13. Système électrique de frein de stationnement suivant l'une des revendications précédentes, **caractérisé en ce que** le signal indicateur de la présence d'une personne dans une cabine de pilotage du véhicule utilitaire peut être transmis à l'unité (16) électronique de commande lorsqu'une ceinture de sécurité est mise.

14. Système électrique de frein de stationnement suivant l'une des revendications précédentes, **caractérisé en ce que** le signal indicateur de la présence d'une personne dans une cabine de pilotage du véhicule utilitaire peut être transmise à l'unité (16) électronique de commande lorsque la pédale de frein et/ou la pédale d'accélérateur est actionnée.

15. Système électrique de frein de stationnement suivant l'une des revendications précédentes, **caractérisé en ce que** le dispositif (10) de vanne et/ou l'unité (16) électronique de commande et/ou le capteur (14) de pression sont intégrés à un système d'épuration de l'air.

16. Procédé pour faire fonctionner un système électrique de frein de stationnement pour un véhicule utilitaire, dans lequel
- un dispositif (10) de vanne met une réserve d'air comprimé en communication avec un cylindre (12) à ressort accumulateur sans interposition d'une vanne de frein à main, le dispositif (10) de vanne alimentant en air le cylindre (12) à ressort accumulateur dans un premier état de commutation et le purgeant dans un deuxième état de commutation,
**caractérisé en ce que**
- on mesure une pression du côté de la réserve d'air comprimé par un capteur (14) de pression,
- une unité (16) électronique de commande commande le dispositif (10) de vanne et détecte un signal fourni par le capteur (14) de pression ainsi qu'un indicateur de la présence d'une personne dans une cabine de pilotage du véhicule utilitaire,
- dans lequel le dispositif (10) de vanne ne peut être mis dans son premier état de commutation par le dispositif (16) de commande que si la pression du côté du réservoir d'air comprimé dépasse une valeur de seuil de pression et que si un signal indicateur de la présence d'une personne dans la cabine de pilotage du véhicule automobile est présent.

17. Procédé suivant la revendication 16, **caractérisé en ce que** l'unité (16) électronique de commande détecte des signaux d'un élément (18) d'actionnement disposé dans la cabine de pilotage du véhicule utilitaire.

18. Procédé suivant la revendication 16 ou 17, **caractérisé en ce que** l'on mesure par le capteur (14) de pression la pression de l'air comprimé envoyé au dispositif (10) de vanne.

19. Procédé suivant la revendication 16 ou 17, **caractérisé en ce que** l'on mesure par le capteur (14) de pression la pression dans un circuit de frein de service du véhicule utilitaire.

20. Procédé suivant la revendication 19, **caractérisé en ce que** l'on utilise comme valeur de seuil de la pression la pression de fermeture d'une soupape de décharge alimentant le circuit de frein de service.

21. Procédé suivant la revendication 16 ou 17, **caractérisé en ce que** l'on mesure par le capteur (14) de pression la pression dans une ligne d'alimentation, qui alimente à la fois le circuit de frein de service et le dispositif (10) de vanne en air comprimé.

22. Procédé suivant l'une des revendications 16 à 21, **caractérisé en ce que** le signal indicateur de la présence d'une personne dans une cabine de pilotage du véhicule utilitaire est transmis à l'unité (16) électronique de commande lorsque le siège du conducteur est occupé.

23. Procédé suivant l'une des revendications 16 à 22, **caractérisé en ce que** le signal indicateur de la présence d'une personne dans une cabine de pilotage du véhicule utilitaire est transmis à l'unité (16) électronique de commande lorsqu'une ceinture de sécurité est mise.

24. Procédé suivant l'une des revendications 16 à 23, **caractérisé en ce que** le signal indicateur de la présence d'une personne dans une cabine de pilotage du véhicule utilitaire est transmis à l'unité (16) électronique de commande lorsque la pédale de frein et/ou la pédale d'accélérateur est actionnée.
